# EUROPEAN PATENT APPLICATION

(11) **EP 4 836 262 A1**
(43) Date of publication of application: **04.11.2026**
(21) Application number: 25173106.3
(22) Date of filing: 29.04.2025
(51) Int. Cl.: H02M 1/00, H02M 1/15, H02M 1/42, H02M 3/00, H02M 3/335, H02M 7/06, H05B 45/382

(54) **INTEGRATED AC-DC CONVERTER FOR LED APPLICATIONS**

(71) Applicant: Tridonic GmbH & Co. KG, 6851 Dornbirn (AT)
(72) Inventor: Ramezan Ghanbari, Alireza, 6850 Dornbirn (AT); Kazemi, Rashid, 6850 Dornbirn (AT); Ammann, Fabian, 6850 Dornbirn (AT); Afzali Arani, Sayed Reza, 6850 Dornbirn (AT)
(74) Representative: Rupp, Christian

(57) **Abstract**

An AC-DC converter for LED lighting applications, comprises:
- A LLC circuitry,
- Two capacitors (Cb1, Cb2) connected in parallel to two switches (S1, S2) of the LLC circuitry, wherein a first inductor (Lc1) is connecting the midpoint of the two switches (S1, S2) with the midpoint of the two capacitors (Cb1, Cb2),
- Wherein the first inductor is coupled with respectively one inductor (LC2, LC3) in each of two AC input lines for an AC supply voltage for the converter,
- A controller arranged for operating the switches (S1, S2), the controller being supplied with a sensing signal representing a bus voltage supplying the LLC circuitry or the ripple contained in said bus voltage,
- The controller being arranged to operate the two switches with an asymmetric duty cycle in order to reduce any ripple contained in the sensing signal.

## Description

The present relates to an AC-DC converter for LED lighting applications. Electrolytic capacitors play a crucial role in power converters by providing energy storage and mitigating ripple. However, their susceptibility to thermal and operational stresses often limits the overall system lifespan, particularly in applications such as industrial power supplies and LED drivers. Single-phase AC-DC converters require power factor correction (PFC) to meet regulatory standards such as IEC61000-3-2. To manage ripple, these converters typically rely on large electrolytic capacitors, which can adversely affect both power density and system lifespan.

A. R. Ghanbari, S. R. Afzali Arani, H. Seyringer, D. Klien, L. Saccavini and N. Linder, "Single-Stage LED Driver Based on Coupled Inductor Power Factor Correction and LLC Converter," PCIM Europe 2024; International Exhibition and Conference for Power Electronics, Intelligent Motion, Renewable Energy and Energy Management, Nürnberg, Germany,2024, introduces a single-stage converter that integrates coupled inductors with LLC resonant operation, achieving inherent PFC and zero-voltage switching (ZVS).

It is the object of the invention to reduce the ripple when applying such single-stage converter. This object is achieved via the features of the independent claims the dependent claims develop further the central idea of the invention.

According to an aspect of the invention an AC-DC converter for LED lighting applications is proposed comprising:
- A LLC circuitry,
- Two capacitors (Cb1, Cb2) connected in parallel to two switches of the LLC circuitry, the two switches forming a half-bridge, wherein a first inductor (Lc1) is connecting the midpoint of the two switches (S1, S2) with the midpoint of the two capacitors (Cb 1, Cb2),
- Wherein the first inductor is coupled with respectively one inductor (LC2, LC3) in each of two AC input lines for an AC supply voltage for the converter,
- A controller arranged for operating the switches (S1, S2), the controller being supplied with a sensing signal representing a bus voltage supplying the LLC circuitry or the ripple contained in said bus voltage,
- The controller is arranged to operate the two switches with an asymmetric duty cycle in order to reduce any ripple contained in the sensing signal.

The controller may be furthermore designed to sense the output voltage of the converter and to adjust the switching frequency of the switches of the LLC circuitry in order to feedback-control the output voltage onto a nominal value.

The controller may be arranged to increase the asymmetry of the duty cycles such that the (directly or indirectly sensed) ripple voltages across the two capacitors progressively shift toward being 180 degrees out of phase with each other .

The controller may be arranged vary the asymmetry of the duty cycles over time.

The invention also relates to an LED lighting system,
comprising a converter according to any of the preceding claims and at least one LED load supplied by said converter.

The invention furthermore relates to a method for operating an AC-DC converter for LED lighting applications, comprising:
- A LLC circuitry,
- Two capacitors (Cb1, Cb2) connected in parallel to two switches (S1, S2) of the LLC circuitry, the two switches forming a half-bridge,
   wherein a first inductor (Lc1) is connecting the midpoint of the two switches (S1, S2) with the midpoint of the two capacitors (Cb1, Cb2),
- Wherein the first inductor is coupled with respectively one inductor (LC2, LC3) in each of two AC input lines for an AC supply voltage for the converter,
- A controller arranged for operating the switches (S1, S2), the controller being supplied with a signal representing a bus voltage supplying the LLC circuitry, comprising the step of:
   operating the two switches (S1, S2) with an asymmetric duty cycle in order to reduce any ripple contained in the bus voltage signal.

Further features and advantages will be explained via the following description of embodiments when taken in conjunction with the enclosed drawings, wherein:
Fig. 1 shows a prior art Single-Stage LED Driver Based on Coupled Inductor Power Factor Correction and LLC Converter, as known from Ghanbari et al.
Fig.2 shows signal waveforms in a converter according to the invention
Fig.3 shows a converter according to the invention.
Fig. 4 shows switching waveforms of a conventional converter and a converter according to the invention, respectively.
Fig. 5 shows experimental results as to the ripple.
Fig.6 shows input current harmonics of a converter according to the invention.
Fig. 7 shows the bus ripple of a conventional converter (Fig 7(a)) and a converter according to the invention (Fig. 7(b)).
Fig. 8 shows a measured efficiency of a converter according to invention.

The proposed control scheme utilizes a dual-control approach that combines both an outer feedback loop and an inner feedback loop to reduce ripple. Additionally, the converter operates in an asymmetrical mode, where duty cycles for the switches are dynamically adjusted.

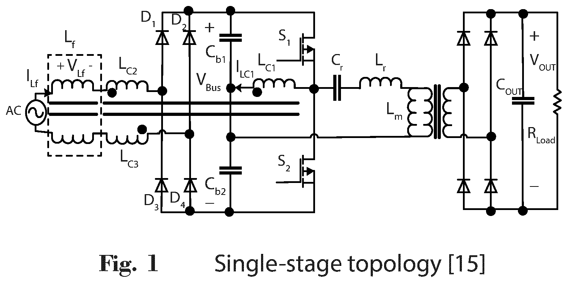

The single-stage AC-DC converter integrates a half-bridge LLC resonant converter with a coupled inductor for power factor correction, as shown in Fig. 1. The converter comprises coupled inductors *LC1*, *LC2*, *LC3*, an input buffer inductor *Lf*, rectifier diodes *D1-D4*, power switches *S1* and *S2* (arranged as a half-bridge), bulk capacitors *Cb1*, *Cb2*, a resonant network (*Cr*, *Lr*), a transformer *Tr*, an output rectifier, and an output capacitor *CO. LC1* is periodically charged and discharged by the bus voltage, influencing *LC2* and *LC3* voltages. Due to the coupled inductor configuration of *LC1*, *LC2*, *LC3*, the input current is drawn in pulses from the AC source. Thus, the converter may present an ohmic mains behavior. The bulk capacitor voltage remains slightly higher than the input voltage and is clamped to the reflected secondary-side voltage under light load conditions. Further details can be found in A. R. Ghanbari, S. R. Afzali Arani, H. Seyringer, D. Klien, L. Saccavini and N. Linder, "Single-Stage LED Driver Based on Coupled Inductor Power Factor Correction and LLC Converter," PCIM Europe 2024; International Exhibition and Conference for Power Electronics, Intelligent Motion, Renewable Energy and Energy Management, Nürnberg, Germany, 2024.

The operation method of such converter over a switching period will now be explained under the following assumptions, as described in Ghanbari et al cited above:
- The duty cycle is symmetrical.
- The capacitors *Cb1* and *Cb2* have the same value and voltage, considered *Vbus*/2.
- The input voltage is sinusoidal.
- The system operates in steady-state conditions.
- *LC2* and *LC3* have equal values with a turn ratio of *nC.*

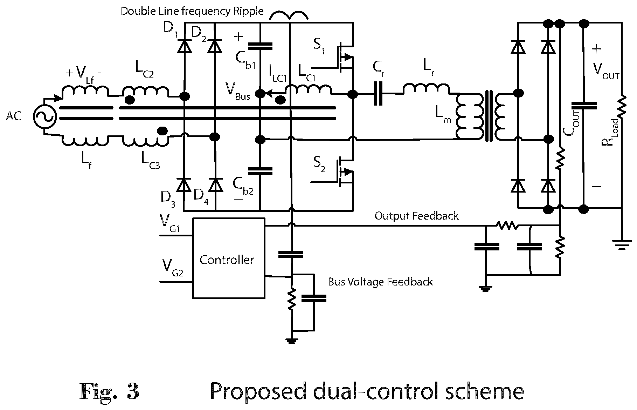

The invention now proposes to modify the known converter as shown in Fig.3. The controller operating the switches S1, S2, is supplied with a signal representing the bus voltage, or representing at least a ripple component (with twice the mains frequency) thereof and especially at least the (double) mains ripple component thereof. The controller uses this feedback sensing signal in order to reduce the ripple in the bus voltage by adjusting the duty cycles of the switching operation of the switches S1, S2 in an asymmetric manner. This thus represents a feedback control loop for reducing the ripple in the bus voltage by means of adjusting the duty cycle asymmetry.

The controller is arranged to vary the asymmetry of the duty cycle having the effect that the phase shift of the directly or indirectly sensed ripple voltages across the two capacitors *Cb1, Cb2* approaches 180 degree, which in turn leads to a at least partial canceling-out of the ripple in the bus voltage. The asymmetry thus may vary over time and may be non-existent during some time periods, depending on the bus voltage ripple.

The controller is furthermore supplied with a feedback signal representing the level of the output voltage of the converter, in order to feedback-control it on to a nominal value by adjusting the switching frequency of the switches S1, S2.

The invention proposes an asymmetrical PWM operation, i.e. the duty cycles of the half bridge switches S1, S2 is adaptive and no longer always symmetrical. In case of asymmetric duty cycles of the switches S1, S2, the voltages across the capacitors *Cb1* and *Cb2* are no longer equal to *Vbus*/2*.* By applying the volt-second balance to *LC1,* the capacitor voltages *VCb1* and *VCb2* are given by:

| | |
|---|---|
| *Vcb*1(*t*) *=* (1 *- D*)*Vbus*(*t*) | (1) |
| *Vcb*2(*t*) *= DVbus*(*t*) | (2) |

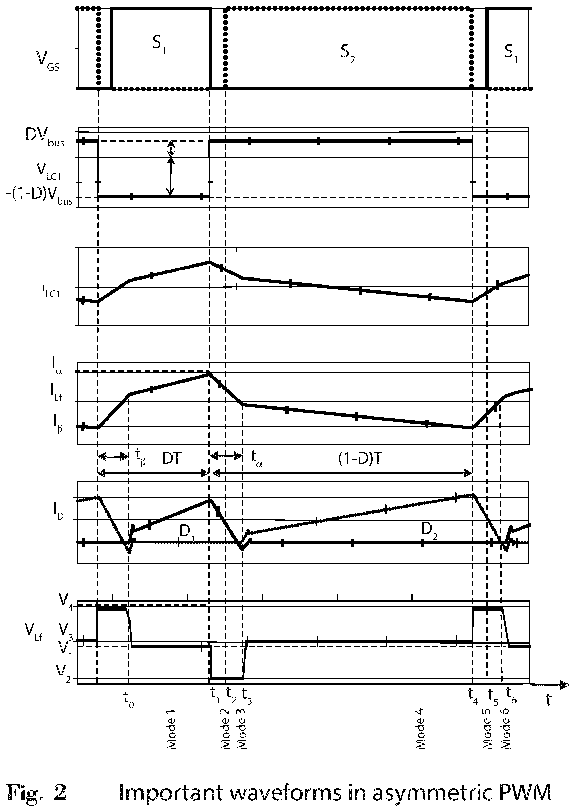

where D is the duty cycle of S1, which according to the invention may deviate from 0.5 . Based on these assumptions, the converter operates in six modes, with key waveforms illustrated in Fig. 2.

### Mode 1 [t0 - t1]:

*S1* is on, applying -(*1*-*D*)*Vbus* to *LC1* and the resonant circuit. *LC2* and *LC3* experience - *nC2*(*1-D*)*Vbus* and *-nC3*(*1-D*)*Vbus,* respectively. *Lf* current (*ILf*) increases almost linearly while *D1* and *D4* conduct. In this mode the voltage across *Lf*(*VLf*) is:

| | |
|---|---|
| *V*1 = *Vin* + (2*nC*(1 *- D*) *-* 1)*Vbus* | (3) |

### Mode 2 [t1 - t2]:

*S1* turns off, and body diode of *S2* conducts, switching *LC1* voltage to *DVbus. ILf* decreases while *D1* and *D4* continue conducting. Therefore, *VLf* is:

| | |
|---|---|
| *V*2 *= Vin -* (2*nCD +* 1)*Vbus* | (4) |

### Mode 3 [t2 - t3]:

*S2* turns on under ZVS, causing the resonance in reverse direction. *ILf* continues to decrease.

### Mode 4 [t3 - t4]:

*ILf* reaches zero and reverses direction. *D2* and *D3* conduct, maintaining *LC1* at *DVbus.* So, *VLf* is:

| | |
|---|---|
| *V*3 *= Vin* - (2*nCD -* 1)*Vbus* | (5) |

**Mode 5 [*****t4** -* ***t5*]:** *S*2 turns off, switching *LC1* voltage to -(*1*-*D*)*Vbus*, while the body diode of *S1* conducts. *ILf* increases, and *VLf* is:

| | |
|---|---|
| *V*4 = *Vin* + (2*nC*(1 *- D*) *+* 1)*Vbus* | (6) |

**Mode 6 [*****t5** -* ***t6*]:** *S1* turns on under ZVS, applying *-*(*1*-*D*)*Vbus* to *LC1,* and *ILf* decreases, and the cycle repeats when *ILf* reaches zero.

The analysis of the converter includes deriving peak values of *ILf*, *Iα* and *Iβ* based on *VLf* voltage states. By defining the voltage ratios *ω =V1* /*V2, γ =V3* /*V4*, equations for time intervals *tα* and *tβ* are obtained, leading to expressions for *Iα* and *Iβ.*

| | |
|---|---|
| *tα = ωT* ((*D -γ*(1*-D*)/(1-*γω*)) | (7) |
| *tβ = γT* (((1 *- D*-)-*ωD*))/(1*-γ*D)) | (8) |
| *Iα = ωV₂T*/ *Lf*((*D -γ*(1-D)/(1-*γω*)) | (9) |
| *Iβ=γV*₄*T*/*Lf*(((1 - *D*)-*ωD*)/(1- *ωD*)) | (10) |

Based on the above calculations, *Iin,avg* is expressed as:

| | |
|---|---|
| *Iin,avg = Iα*,*avg - Iβ*,*avg = Iα*/2*T* (*DT - tβ + tα*) - *Iβ*/2T ((1 *- D*)*T - tα + tβ*) | (11) |

Substituting (7) to (10) in (11) derives *Iin,avg*, which is now also a function of *D.* As *D* varies, distortion appears in the input current. When *D* is set to 0.5, the converter exhibits an ohmic input impedance.

### Control Scheme for Ripple Reduction

To minimize the required electrolytic capacitance in the integrated coupled inductor LLC converter, a dual-control scheme is introduced, as shown in Fig. 3. The control scheme consists of an outer feedback loop from the output voltage and an inner feedback loop from the bus voltage. Conventional switching frequency control of the LLC converter regulates the output voltage, while asymmetric PWM control minimizes the bus voltage ripple. The total bus capacitance is given by [16]:

| | |
|---|---|
| *Cbus = Pout*/(*ω*Δ*VbusVbus*) | (12) |

where *Cbus = Cb1 + Cb2*, *Vbus* is the bus voltage, *ΔVbus* is the bus ripple and *Pout* is the output power. Reducing the imbalance between input and output power over a half of the line cycle decreases the required capacitance. The duty cycle is adjusted dynamically to reduce the imbalance between input and output power. The input power ripple results from double-line frequency and is expressed as:

| | |
|---|---|
| *pin*(*t*) *= Pavg + Pripple = Pavg + V gIgcos*(2*ωt*) | (13) |

Where *Pavg* is the average input power and *Pripple* is Double-line frequency ripple with angular frequency 2*ω*. The bus capacitors store energy. Integrating the input power ripple gives the energy ripple:

| | |
|---|---|
| *E*(*t*) = ∫ *V _{g}I_{g}cos*(2*ωt*)*dt = V* _{g}I_{g}/2*ω sin*(2*ωt*) | (14) |

The ripple in stored energy follows the input power ripple, leading to a phase shift of *π*/2. The total bus voltage ripple results from the sum of the ripples of two series capacitors:

| | |
|---|---|
| Δ*Vbus*(*t*) *=* Δ*V*_{*Cb*1}(*t*) *+* Δ*V*_{*Cb*2}(*t*) | (15) |

Each capacitor contributes a ripple:

| | |
|---|---|
| Δ*Vbus*(*t*) *= V^Cb*1*cos*(2*ωt*) *+ V^Cb*2*cos*(2*ωt + ϕ*) | (16) |

where *ϕ* is the phase shift between bulk capacitor voltage ripples. Applying the trigonometric identity:

| | |
|---|---|
| Δ*Vbus*(*t*) *=* 2*V^Cb*1*cos*(2*ωt + ϕ*/2) cos(*ϕ*/2) + (*V^Cb*1 *- VCb*2)*cos* (2*ωt* + *ϕ*/2) | (17) |

Thus, ripple minimization occurs when *ϕ = π.*

Under asymmetric PWM control, the duty cycles are *D* for *S1* and 1-*D* for *S2* which modifies the midpoint current expressed as:

| | |
|---|---|
| *Imid*(*t*) *= Iavg +* Δ*Imid*(*t*) | (18) |

Where *Iavg* is the average midpoint current (related to the DC load current). *ΔImid(t)* is the ripple component caused by the 2*ω* input power ripple. Since the input power has a 2*ω* ripple, the midpoint current ripple follows the same:

| | |
|---|---|
| *Imid*(*t*) *= Iavg + I^midcos*(2*ωt*) | (19) |

The midpoint current splits into capacitor currents:

| | |
|---|---|
| *ICb*1(*t*) = 1/2 *Imid*(*t*) *+ ΔICb*1(*t*) | (20) |
| *ICb*2(*t*) *=* 1/2 *Imid*(*t*) *- ΔICb*1(*t*) | (21) |

With the asymmetric duty cycle, the charging and discharging rates of the capacitors become unequal. This shifts the timing of how *Imid(t)* splits into *ICb1 and ICb2.* So, *ΔICb1*(*t*) is no longer in phase with *Imid(t),* but gets a phase shift *ϕ*:

| | |
|---|---|
| *ΔICb*1(*t*) *= I^*Δ*cos*(2*ωt + ϕ*) | (22) |

where *I^*Δ is the peak ripple current. By integrating the capacitor currents over time, the capacitor voltage ripples are calculated:

| | |
|---|---|
| *vCb*1 (*t*) *= I^mid*/2*C sin*(2*ωt*) *+ I^*Δ/*C sin*(2*ωt* + *ϕ*) | (23) |

and the phase shift is linked to the duty cycle D:

| | |
|---|---|
| *vCb*2 (*t*) *= I^mid*/2*C sin*(2*ωt*) - *I^*Δ/*C sin*(2*ωt* + *ϕ*) | (24) |

| | |
|---|---|
| *ϕ = k*(*D* - 0.5) | (25) |

By substituting (25) and (17) in (12) and assuming the same ripple amplitude for *Cb1* and *Cb2*, *k* is calculated based on the circuit parameters and the output power:

| | |
|---|---|
| *k =* 2*cos-*1(*Pout*/2*CbusV^Cb*1*Vbus*)/(*D* - 0.5) | (26) |

### Experimental Results

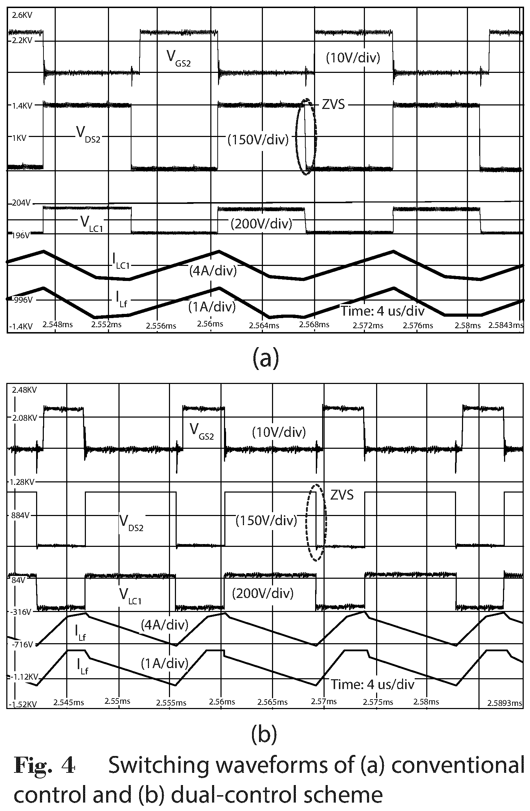

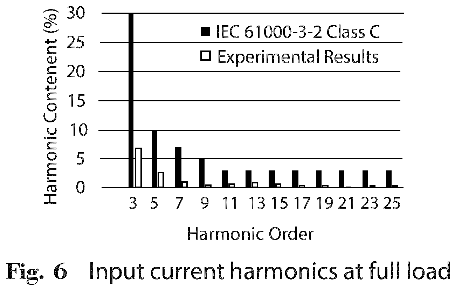

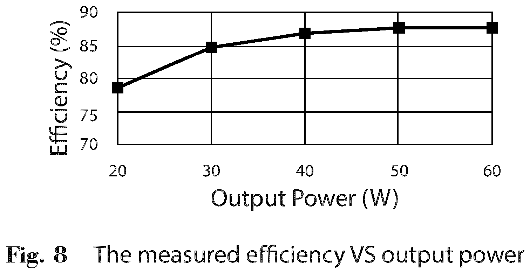

A prototype was manufactured to validate the theoretical analysis. The waveforms of *ILC1*, *ILf*, *VGS2* and *VDS2* in symmetric and asymmetric control mode are shown in Fig. 4. As indicated, ZVS is provided in both modes. Fig. 5 shows the experimental results of conventional control and dual-control scheme on input current, bulk capacitor voltages and output ripple under full-load conditions. When the conventional control is applied with *ϕ* = 0 the maximum output ripple is 462mA and when the dual-control scheme is used with *ϕ = π*, the ripple is significantly reduced to 155mA. Table 2 compares the two control methods. As seen, the PF and THD are slightly affected by asymmetric PWM. However, the required bus capacitor is reduced significantly. The comparison in Fig. 6 illustrates the input current harmonics of the converter with dual-control scheme under full load, compared to the IEC 61000-3-2 Class-C standard. Each harmonic current is lower than the standard values, aligning with the IEC 61000-3-2 Class-C requirements. Since Class C has the strictest limits, compliance with it ensures passing other classes as well. Fig. 7 shows the bus voltage ripple and the ripple of each bus capacitor for the converter with both the conventional and dual-control schemes. As seen, the bus voltage double line frequency ripple is 33V with conventional and 26V with dual-control scheme. The efficiency of the converter with both control schemes is identical and is shown in Fig. 8.

**Table 1 Prototype Specification**

| Component | Designators | Value or part |
|---|---|---|
| Nominal Power | *Pout* | 60 W |
| Input voltage | *Vin* | 230 Vrms |
| Output voltage | *VO* | 48 V |
| Diodes | *D1 - D4* | ES3J |
| Power Switches | *S1* and *S2* | STD10N60M2 |
| Coupled Inductor | *LC1*, *LC2* and *LC3* | 700 µH, 1400 µH |
| Resonant network | *Lm, Lr, Cr, Rac, Qr* | 2100 µH, 400 µH, 3.3 nF, 780Ω, 0.4 |
| Resonant frequencies | *fr1,fr2* | 55 kHz, 140 kHz |

**Table 2 Conventional VS Dual scheme**

| Control method | Conventional | Invention |
|---|---|---|
| PF | 0.99 | 0.98 |
| THD | 2.5 | 9.5 |
| Output ripple | 462 mA | 155 mA |
| Required *Cbus* | 44 µF | 4.7uF |

## Claims

1. An AC-DC converter for LED lighting applications, comprising:
- A LLC circuitry,
- Two capacitors (Cb1, Cb2) connected in parallel to two switches (S1, S2) of the LLC circuitry, wherein a first inductor (Lc1) is connecting the midpoint of the two switches (S1, S2) with the midpoint of the two capacitors (Cb1, Cb2),
- Wherein the first inductor is coupled with respectively one inductor (LC2, LC3) in each of two AC input lines for an AC supply voltage for the converter,
- A controller arranged for operating the switches (S1, S2), the controller being supplied with a sensing signal representing a bus voltage supplying the LLC circuitry or the ripple contained in said bus voltage,
- The controller being arranged to operate the two switches (S1, S2), with duty cycles with adaptive asymmetry in order to reduce any ripple contained in the sensing signal.

2. The converter of claim 1,
Wherein the controller is furthermore designed to sense the output voltage of the converter and to adjust the switching frequency of the switches (S1, S2) of the LLC circuitry in order to feedback-control the output voltage onto a nominal value.

3. The converter of any of the preceding claims,
wherein the controller is configured to increase the duty cycle asymmetry such that the ripple voltages across the two capacitors (Cb1, Cb2) progressively shift toward being 180 degrees out of phase with each other, thus reducing any ripple in the bus voltage..

4. The converter of any of the preceding claims,
wherein the controller is arranged to vary the asymmetry of the duty cycles over time.

5. A LED lighting system,
comprising a converter according to any of the preceding claims and at least one LED load supplied by said converter.

6. A method for operating an AC-DC converter for LED lighting applications, comprising:
- A LLC circuitry,
- Two capacitors (Cb1, Cb2) connected in parallel to two switches (S1, S2) of the LLC circuitry, wherein a first inductor (Lc1) is connecting the midpoint of the two switches (S1, S2) with the midpoint of the two capacitors (Cb1, Cb2),
- Wherein the first inductor is coupled with respectively one inductor (LC2, LC3) in each of two AC input lines for an AC supply voltage for the converter,
- A controller arranged for operating the switches (S1, S2), the controller being supplied with a signal representing a bus voltage supplying the LLC circuitry, comprising the step of:
operating the two switches (S1, S2) with an asymmetric duty cycle which is varied in order to reduce any ripple contained in the bus voltage signal.
